# EUROPÄISCHE PATENTANMELDUNG

(11) **EP 2 027 904 A2**
(43) Veröffentlichungstag der Anmeldung: **25.02.2009**
(21) Anmeldenummer: 08161055.2
(22) Anmeldetag: 24.07.2008
(51) Int. Cl.: B01D 29/01, B01D 46/10, B01D 46/52

(54) **Filterelement mit Dichtung und Verfahren zur Herstellung des Filterelements**

(30) Priorität: 24.07.2007 DE 102007034907
(71) Anmelder: MANN+HUMMEL GmbH, 71638 Ludwigsburg (DE)
(72) Erfinder: Brenneis, Fritz, 84163 Marklkofen (DE); Trautmann, Pius, Dr., 70499 Stuttgart (DE)

(57) **Zusammenfassung**

Die vorliegende Erfindung betrifft ein Filterelement (10) das an wenigstens einem Abschnitt seines Umfangs mit einer Dichtung (12) versehen ist, wobei die Dic htung (12) aus einem thixotropen Dich tungsmaterial (24) besteht oder dieses z umindest aufweist.

## Beschreibung

### Technisches Gebiet

Die vorliegende Erfindung bezieht sich auf ein Filterelement, das an seinem Umfang mit einer Dichtung versehen ist, sowie auf Verfahren zur Herstellung eines solchen Filterelements.

### Stand der Technik

Ein Filterelement dient allgemein der Filtration von beispielsweise Fluid-Strömungen oder gasförmigen Medien, wie Luftströmungen, die beispielsweise dem Fahrzeuginnenraum eines Kraftfahrzeugs zugeführt werden. Neben Kraftfahrzeugen können Filter auch auf vielen anderen Gebieten eingesetzt werden, wie beispielsweise für Klimaanlagen und Belüftungssysteme in Gebäuden oder auch zum Filtern von flüssigen Medien.

Die Wirksamkeit eines Filters hängt insbesondere von der Größe der von der Luft durchströmten Oberfläche des Filters ab. Bei Kfz-Innenraumluftfiltern werden deshalb überwiegend zick-zack-förmig bzw. ziehharmonikaförmig gefaltete Filter verwendet. Durch eine solche Faltung kann auf diese Weise, abhängig von der Faltungshöhe und dem Faltungsabstand der verschiedenen Faltenabschnitte des Filters, eine effektive Vergrößerung der von dem Luftstrom durchströmten Filterfläche erzielt werden.

Ein Filterelement, das beispielsweise als Kfz-Innenraum-Luftfilter eingesetzt wird, dient dazu, die von außen in den Innenraum des Fahrzeugs geleitete und aufbereitete Luft mittels eines geeigneten Filters zu filtern. Dabei kommen beispielsweise Partikel- oder Geruchsfilter zum Einsatz oder Kombinationen davon, welche die in der Luft enthaltenen Partikel und inhärente Gerüche aus der Umgebungsluft herausfiltern. Bei den Kfz-Innenraum-Luftfiltern ergibt sich dabei das Problem, dass das Filterelement in einem entsprechenden Aufnahmeraum so eingebaut werden muss, dass es dicht anliegt und sich kein Spalt zwischen dem Filterelement und dem Aufnahmeraum bilden kann, der zu Undichtigkeiten bzw. zu einer Leckage führt.

Aus dem Stand der Technik sind Filterelemente, beispielsweise Innenraumfilter, bekannt, bei denen das Filterelement mit einem festen oder flexiblen textilen Seitenstreifen abgeschlossen wird. Ein solcher Seitenstreifen dient gleichzeitig als Abdichtung zu einem Aufnahmeraum.

Solche Filterelemente haben jedoch den Nachteil, dass die Seitenstreifen als Abdichtung nur ungenügend wirksam sind und immer wieder an ihre Grenzen stoßen. Des Weiteren kann die Dichtkontur eines solchen textilen Seitenstreifens nicht ohne weiteres variiert werden.

Aus der DE 101 63 026 ist ein Filterelement mit einer über eine Fläche eines Flachfilter überstehenden Dichtung bekannt. Die Dichtung ist als nichtgeformter Dichtwulst aus einer thixotropen Reaktionsmischung gefertigt.

Es besteht daher ein Bedarf, ein Filterelement mit einer Dichtung bereitzustellen, die ausreichend abdichtend anliegt, ohne dass Undichtigkeiten auftreten können.

Zusätzlich besteht ein Bedarf daran, dass ein solches Filterelement mit einer Dichtung einfach und preisgünstig in der Herstellung ist.

Die Dichtung soll vorteilhafterweise auch an der Seite des Filterelements angebracht werden können.

Die Dichtung soll vorteilhafterweise geformt werden können, d.h. unrunde Formen, z.B. eine oder mehrere abstehende Dichtleisten oder seitliche Wülste sollen ermöglicht werden.

Vor diesem Hintergrund liegt der vorliegenden Erfindung die Aufgabe zugrunde, ein Filterelement mit einer verbesserten Dichtung bereitzustellen, die außerdem kostengünstig in der Herstellung ist.

### Offenbarung der Erfindung

Erfindungsgemäß wird die oben genannte Aufgabe durch ein Filterelement mit den Merkmalen des Patentanspruchs 1 und/oder durch ein Verfahren mit den Merkmalen des Patentanspruchs 10 bzw. durch ein Verfahren mit den Merkmalen des Patentanspruchs 11 gelöst.

Demgemäß ist vorgesehen:

Ein Filterelement das an wenigstens einem Abschnitt seines Umfangs mit einer Dichtung versehen ist, wobei die Dichtung aus einem thixotropen Dichtungsmaterial besteht oder dieses zumindest aufweist.

Ein Verfahren zum Herstellen eines Filterelements mit einer Dichtung mit den Schritten: Eindosieren eines thixotropen Dichtungsmaterials in ein Formband eines Formwerkzeugs; Andrücken des Formbands mit dem thixotropen Dichtungsmaterial an wenigstens einen Abschnitt des Umfangs des Filterelements und Entfernen des Formwerkzeugs mit dem Formband, nachdem aus dem Dichtungsmaterial eine Dichtung mit der gewünschten Form an dem Filterelement ausgebildet worden ist.

Ein Verfahren zum Herstellen eines Filterelements mit einer Dichtung mit den Schritten: Aufbringen eines thixotropen Dichtungsmaterials an wenigstens einem Abschnitt des Umfangs des Filterelements; Aufbringen eines Formwerkzeugs mit einem Formband auf dem thixotropen Dichtungsmaterial; Formen des Dichtungsmaterials mittels des Formbands, so dass eine Dichtung mit der gewünschten Form an dem Filterelement ausgebildet wird und anschließendes Entfernen des Formwerkzeugs mit dem Formband.

Die der vorliegenden Erfindung zugrunde liegende Idee besteht darin, ein Filterelement mit einer Dichtung bereitzustellen, die ein verbessertes Abdichten des Filterelements in einem Filteraufnahmeraum erlaubt. Hierzu wird eine Dichtung aus einem thixotropen Dichtungsmaterial an wenigstens einem Abschnitt des Umfangs des Filterelements angebracht.

Auf diese Weise ist es möglich, dass das Filterelement mit einer verbesserten seitlichen Abdichtung in einem Filteraufnahmeraum bereitgestellt werden kann, im Gegensatz zu den bisher verwendeten textilen Seitenstreifen. Darüber hinaus ist ein solches Filterelement mit einer derartigen Dichtung leicht herzustellen und vergleichsweise kostengünstig. Dies liegt daran, dass sich das thixotrope Dichtungsmaterial besonders einfach und schnell verarbeiten lässt. Ein weiterer Vorteil ist, dass eine solche Dichtung mit einer beliebigen Kontur hergestellt bzw. aufgeschäumt werden kann.

Vorteilhafte Ausgestaltungen und Weiterbildungen der Erfindung ergeben sich aus den weiteren Unteransprüchen sowie aus der Beschreibung in Zusammenschau mit den Zeichnungen.

In einer vorteilhaften Ausgestaltung ist das thixotrope Dichtungsmaterial der Dichtung des Filterelements beispielsweise aus thixotropem PUR und/oder thixotropem Silikon. Das thixotrope PUR hat dabei den Vorteil, dass es eine im Wesentlichen geschlossene Oberfläche bilden kann, in die Bakterien nicht so leicht eindringen können, im Gegensatz zu den bekannten textilen Seitenstreifen. Grundsätzlich ist aber auch denkbar Dichtungsmaterialien zu verwenden, die sich ähnlich den thixotropen Dichtungsmaterialien verhalten. Das heißt diese Dichtungsmaterialien laufen beim Aufbringen auf das Filterelement nicht von diesem herunter und lassen sich außerdem leicht in eine gewünschte Form formen.

Vorteilhafterweise ist die Dichtung geformt, d.h. weicht von einem runden Dichtwulst ab. Hierdurch kann die Anpassung an verschiedene Aufnahme und Dichtungsgeometrien an einem Gehäuse realisiert werden. Die Dichtung kann z.B. als Profil mit einem oder mehreren rechteckigen oder halbrunden Vorsprüngen ausgestaltet sein. Im eingesetzten Zustand kann die Dichtung in verschiedenen Ausführungsformen alternativ radial oder axial oder sowohl radial als auch axial wirken.

Die Dichtung kann in einer Ausführungsform, zusätzlich zu ihrer Funktion das Filterelement im Gehäuse abzudichten, gleichzeitig an den Stirnseiten oder Teilen der Stirnseiten der Faltung, an denen die Falten offen sind, die Falten verschließen.

In einer weiteren vorteilhaften Ausgestaltung ist die Dichtung mit wenigstens einem zusätzlichen Dichtelement ausgebildet, beispielsweise einer Dichtlippe. Dies hat den Vorteil, dass die Abdichtung des Filterelements weiter verbessert werden kann. Des Weiteren kann eine thixotrope Dichtung sehr einfach mit zusätzlichen Dichtungselementen aufgeschäumt bzw. versehen werden, im Gegensatz zu den bekannten textilen Seitenstreifen. Die Dichtungselemente bzw. die Kontur der Dichtung kann dabei problemlos beliebig variiert werden.

In einer anderen vorteilhaften Ausführungsform weist das Filterelement eine zick-zack-förmige bzw. ziehharmonikaförmige und/oder wellenförmige Faltung auf. Dies hat den Vorteil, dass Filterelemente mit einer beliebigen Faltungsart ohne Einschränkung verwendet und mit einer Dichtung aus einem thixotropen Dichtungsmaterial versehen werden können.

In einer weiteren vorteilhaften Ausgestaltung weist das Filterelement eine teilweise umlaufende oder vollständig umlaufende Dichtung auf. Dies hat den Vorteil, dass ein Filterelement abhängig von Funktion und Einsatzzweck sowohl mit einer umlaufenden Dichtung, wie auch nur partiell mit einer Dichtung versehen werden kann.

In einer anderen vorteilhaften Ausgestaltung sind die Falten des Filterelements zumindest teilweise oder vollständig durch die Dichtung verschlossen. Durch das vollständige Verschließen der Falten kann eine optimale Dichtung durch das Filterelement erzielt werden, da keine Spalte vorhanden sind, durch die ein zu filterndes Medium ungefiltert dringen kann.

In einer weiteren vorteilhaften Ausführungsform wird die Dichtung mittels eines Klebstoffs an dem Filterelement befestigt ist. Hierzu kann beispielsweise ein Hotmeltkleber oder ein anderer geeigneter Kleber verwendet werden. Dies hat den Vorteil, dass die Dichtung beispielsweise in Form eines Endlosbandes vorab hergestellt und anschließend einfach an den Umfangsseiten eines entsprechenden Filterelements aufgeklebt werden kann.

Gemäß einer anderen vorteilhaften Ausgestaltung wird das thixotrope Dichtungsmaterial über ein Formwerkzeug mit einem entsprechenden Formband auf das Filterelement aufgebracht. Dies hat den Vorteil, dass die Dichtung direkt an dem Filterelement angeformt werden kann.

In einer weiteren vorteilhaften Ausführungsform wird als Filterelement ein Geruchs- und/oder Partikelfilter oder Flüssigkeitsfilter verwendet. Dies hat den Vorteil, dass das Filterelementen mit einer Dichtung aus einem thixotropen Dichtungsmaterial für eine Vielzahl von Verwendungen eingesetzt werden kann und nicht nur auf Luftfilter beschränkt ist sondern für alle anderen Arten von Filtern grundsätzlich verwendet werden kann.

### Kurze Beschreibung der Zeichnungen

Die Erfindung wird nachfolgend anhand der in den Figuren der Zeichnung angegebenen Ausführungsbeispiele erläutert. Dabei zeigen:

Fig. 1 eine schematische Perspektivansicht eines Filterelements, dessen Dichtung mittels eines Formwerkzeugs mit einem Formband geformt wird,

Fig. 2 eine Seitenansicht des Filterelements gemäß Fig. 1, wobei die Dichtungsmasse in das Formband des Formwerkzeugs gefüllt wird und

Fig.3 eine Seitenansicht des Filterelements gemäß Fig. 1, wobei die Dichtungsmasse auf das Filterelement aufgebracht wird und anschließend das Formband des Formwerkzeugs aufgebracht wird.

In den Figuren der Zeichnung sind gleiche und funktionsgleiche Komponenten, Elemente und Merkmale - sofern nichts Anderes angegeben ist - mit denselben Bezugszeichen versehen worden.

### Ausführungsform(en) der Erfindung

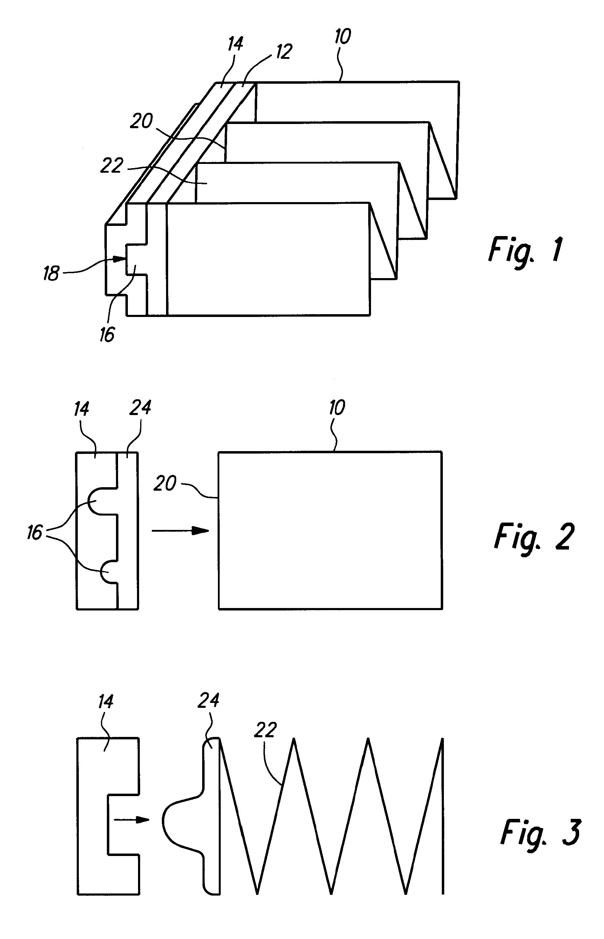

Fig. 1 zeigt eine schematische Perspektivansicht eines erfindungsgemäßen Filterelements 10 mit einer Dichtung 12. Die Dichtung 12 besteht dabei aus einem thixotropen Dichtungsmaterial 24, wie beispielsweise thixotropes PUR (thixotropes Polyurethan) oder thixotropes Silikon. Die Aufzählung ist hierbei lediglich beispielhaft und nicht abschließend. Grundsätzlich kann für die Dichtung 12 des Filterelements 10 jede Art eines geeigneten thixotropen Dichtungsmaterials 24 verwendet werden oder ein Dichtungsmaterial, das sich ähnlich oder im Wesentlichen gleich einem thixotropen Dichtungsmaterial verhält.

Um die Dichtung 12 aus dem thixotropen Dichtungsmaterial 24 zu formen wird beispielsweise ein Formwerkzeug (nicht dargestellt) mit einem Formband 14 verwendet. Das Formband 14 bildet dabei die gewünschte Kontur der Dichtung 12 und wird nach dem Formgebungsprozess entfernt. Das fertige Filterelement 10 mit Dichtung 12 kann anschließend beispielsweise in Form eines Luftfilters bzw. Geruchs- und/oder Partikelfilters verwendet werden. Grundsätzlich kann aber auch jede andere Art von Filterelement 10 mit der zuvor beschriebenen Dichtung versehen werden. So ist beispielsweise als Filterelement 10 auch ein Flüssigkeitsfilter denkbar.

Das thixotrope Dichtmaterial, wie beispielsweise thixotropes PUR hat den Vorteil, dass es sobald es auf das Filterelement 10 aufgetragen wird, sich soweit verfestigen kann, dass es durch das Formwerkzeug mit seinem Formband 14 geformt werden kann, ohne dass es dabei von dem Filterelement 10 herunterläuft. Ein nicht-thixotropes PUR ist dagegen relativ flüssig, so dass es nach dem Auftrag auf das Filterelement 10 von diesem herunterläuft. Des Weiteren setzt eine Polymerisation des thixotropen PUR verhältnismäßig schnell ein, so dass der Formgebungsprozess mit Hilfe des Formwerkzeugs schnell abgeschlossen und dieses anschließend entfernt werden kann. Nicht-thixotropes PUR braucht dagegen in einem Formgebungsprozess mehrere Minuten um sich ausreichend zu verfestigen. Ein weiterer Vorteil von thixotropem PUR ist, dass es eine im Wesentlichen geschlossene Oberfläche bilden kann, bei dem Bläschen miteinander verbunden sind. Dadurch können sich Bakterien nicht einfach einlagern. Bei textilen Seitenstreifen können dagegen Bakterien in das Gewebe leicht eindringen.

Der Begriff Thixotropie bezeichnet die Eigenschaft eines Nicht-Newtonschen Fluids, bei einer konstanten Scherung über eine Zeitachse X die Viskosität abzubauen. Nach Aussetzung der Scherbeanspruchung wird die Ausgangsviskosität wieder aufgebaut. Moderne standfeste Dichtstoffe sind ein Beispiel für thixotrop reagierende Produkte. Sie lassen sich leicht verteilen und zeigen dabei auch das notwendige Fließverhalten, sie stocken aber im Wesentlichen sofort, wenn sie nicht mehr mechanisch beansprucht werden.

Das Dichtband bzw. die Dichtung 12, wie sie in den Fig. 1 bis 3 dargestellt ist, ist mit einer Dichtlippe 16 als zusätzlichem Dichtelement 18 versehen. Diese hat den Vorteil, dass eine seitliche Abdichtung weiter verbessert werden kann. Grundsätzlich kann das Dichtband 12 eine beliebige Kontur aufweisen bzw. wahlweise mit wenigstens einem zusätzlichen Dichtelement 18, wie beispielsweise einer Dichtlippe 16, versehen sein bzw. geschäumt werden.

Grundsätzlich kann das Filterelement 10 umlaufend oder zumindest an einem oder mehreren Abschnitten mit der zuvor beschriebenen Dichtung 12 versehen werden, je nachdem welcher Bereich des Filterelements 10 abdichtend ausgebildet werden soll.

Die Dichtung 12 kann dabei als Endlosstreifen vorgefertigt werden, wobei wahlweise zusätzliche Dichtungselemente 18, wie beispielsweise eine oder mehrere Dichtlippen 16 vorgesehen werden können. Der Endlosstreifen kann dabei beispielsweise mittels Klebstoff an einem entsprechenden Filterelement 10 angebracht werden (nicht dargestellt). Dies hat den Vorteil, dass eine Endlosfertigung ohne eine Gießform möglich ist, wobei Filterelemente 10 in einer entsprechenden benötigten Länge abgeschnitten und mit dem Dichtband 12 versehen werden. Dies entspricht auch der Fertigung mit textilen Seitenstreifen. Der Einsatz von Dichtungen 12 aus einem thixotropen Dichtungsmaterial 24 hat jedoch den Vorteil, dass die seitliche Abdichtung bei den Filterelementen 10 erheblich verbessert werden kann gegenüber der Verwendung von textilen Seitenstreifen. Wahlweise können zusätzlich Dichtelemente 18 angeschäumt werden, was die Abdichtung weiter verbessert.

Eine weitere Möglichkeit zur Herstellung eines erfindungsgemäßen Filterelements 10 mit einer Dichtung 12 wird mit Bezug auf Fig. 2 näher erläutert. Dabei wird beispielsweise ein thixotropes PUR in ein umlaufendes Formband 14 eines Formwerkzeugs eindosiert. In dem Formband 14 können dabei weitere Dichtungselementen 18, wie zwei abgerundete Dichtlippen 16, integriert werden. Das noch flüssige thixotrope PUR wird an den Faltenbalg 20 des Filterelements 10 angedrückt, wobei das Dichtungsmaterial 24 dabei gleichzeitig zum seitlichen Verschließen der Falten 22 des Filterelements 10 verwendet werden kann. Die Falten 22 werden dabei zumindest teilweise oder vollständig mit dem Dichtungsmaterial 24 verschlossen. Dies gilt für alle Ausführungsformen.

Weiter kann das erfindungsgemäße Filterelement mit einer Dichtung, wie in Fig. 3 dargestellt, hergestellt werden. Als Dichtungsmaterial 24 wird dabei thixotropes PUR an der Seite des Filterelements 10 aufgebracht. Danach wird ein Formwerkzeug mit einem entsprechend geformten Formband 14 auf das thixotrope PUR aufgesetzt und dieses mit einer entsprechenden Kontur des Formbands 14 ausgebildet. Das thixotrope PUR hat den Vorteil gegenüber nicht-thixotropem PUR, dass es problemlos auf das Filterelement 10 aufgebracht werden kann und sich dabei schnell verfestigt, ohne von dem Filterelement 10 herunterzulaufen. Ein nicht-thixotropes PUR verhält sich dagegen so, dass es nach dem Auftragen auf das Filterelement 10 von diesem herunterläuft, da es am Anfang flüssiger ist und mehrere Minuten braucht um sich ausreichend zu verfestigen und geformt zu werden.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Die vorliegende Erfindung ist insbesondere nicht auf die in den obigen Ausführungsbeispielen beschriebenen Ausführungsformen und Varianten beschränkt. Insbesondere ist die vorliegende Erfindung nicht auf thixotropes PUR und thixotropes Silikon als Dichtungsmaterial 24 beschränkt. Grundsätzlich kann jedes andere thixotrope Dichtungsmaterial 24 verwendet werden oder Dichtungsmaterial, dass sich ähnlich einem solchen Material verhält.

Des Weiteren ist die Erfindung auch nicht auf die in den Figuren 1 bis 3 gezeigten Formbänder 14 beschränkt. Statt einer oder zwei Dichtlippen 16 kann die Dichtung 12 auch mit mehreren Dichtlippen 16 versehen sein, die die gleiche Form oder unterschiedliche Formen aufweisen können. Grundsätzlich kann die Kontur der Dichtung 12, sowie die Form und Anzahl von zusätzlichen Dichtelementen 18, wie beispielsweise Dichtlippen 16, je nach Einsatzzweck und Funktion variiert werden.

Außerdem ist die Erfindung nicht nur auf Filterelemente 10 zu Filterung von gasförmigen Medien beschränkt, sondern lässt sich sehr vorteilhaft auch für Filterelemente 10 zur Filterung von Flüssigkeiten einsetzen. Auch ist die Erfindung nicht notwendigerweise auf Filterelemente 10 beispielsweise für Klimaanlagen und dergleichen für den Kraftfahrzeugbereich beschränkt, sondern kann bei beliebigen Anwendungen, in denen Filterelemente 10 zum Einsatz kommen, ebenfalls vorteilhaft eingesetzt werden.

Des Weiteren kann die Faltung 22 des Filterelements 10 nicht nur zick-zack-förmig bzw. ziehharmonikförmig sondern auch wellenförmig sein.

Bei den zuvor beschriebenen Ausführungsformen kann des Weiteren das Dichtungsmaterial 24 umlaufend oder teilweise umlaufend oder abschnittsweise auf die Seiten des Filterelements 10 aufgetragen werden. Die Dichtung 12 kann dabei mit dem Filterelement 10, wie in den Fig. 1 bis 3 gezeigt ist bündig abschließen oder auch über das Filterelement 10 auf wenigstens einer Seite überstehen (nicht dargestellt).

Weiter muss das Filterelement 10 nicht wie in Fig. 1 gezeigt ist eine viereckige Form aufweisen und eine zick-zack-förmige Faltung, sondern kann eine beliebige Form und Faltung aufweisen. Das Filterelement 10 kann neben einer viereckigen Form auch eine andere vieleckige Form aufweisen oder auch rund bzw. oval ausgebildet sein oder eine Kombination aus eckigen und runden Konturen aufweisen. Die Außenkontur des Filterelements 10 wird dabei, wie zuvor beschrieben mit der Dichtung 12 aus einem thixotropen Dichtungsmaterial 24 versehen.

Des Weiteren ist die Erfindung auch nicht auf die zuvor beschriebenen Herstellungsverfahren beschränkt. Die Verfahren stellen lediglich beispielhafte, bevorzugte Ausführungsformen dar, wobei Modifikationen möglich sind.

## Patentansprüche

1. Filterelement (10) das an wenigstens einem Abschnitt seines Umfangs mit einer geformten Dichtung (12) versehen ist, wobei die Dichtung (12) aus einem thixotropen Dichtungsmaterial (24) besteht oder dieses zumindest aufweist.

2. Filterelement nach Anspruch 1, **dadurch gekennzeichnet, dass** das thixotrope Dichtungsmaterial (24) beispielsweise thixotropes PUR und/oder thixotropes Silikon ist.

3. Filterelement nach Anspruch 1 oder 2, **dadurch gekennzeichnet, dass** die Dichtung (12) mit wenigstens einem zusätzlichen Dichtelement (18) ausgebildet ist, beispielsweise einer Dichtlippe (16).

4. Filterelement nach Anspruch 1, 2 oder 3, **dadurch gekennzeichnet, dass** das Filterelement (10) eine zick-zack-förmig bzw. ziehharmonikaförmige und/oder wellenförmige Faltung aufweist.

5. Filterelement nach einem der Ansprüche 1 bis 4, **dadurch gekennzeichnet, dass** das Filterelement (10) teilweise umlaufend oder vollständig umlaufend mit der Dichtung (12) versehen ist.

6. Filterelement nach einem der Ansprüche 1 bis 5, **dadurch gekennzeichnet, dass** die Falten (22) des Filterelements (10) zumindest teilweise oder vollständig durch die Dichtung (12) verschlossen sind.

7. Filterelement nach einem der Ansprüche 1 bis 6, **dadurch gekennzeichnet, dass** di e Dichtung (12) mittels eines Klebstoffs an dem Filterelement (10) befestigt ist, beispielsweise mittels eines Hotmeltklebers.

8. Filterelement nach einem der Ansprüche 1 bis 7, **dadurch gekennzeichnet, dass** das Dichtungsmaterial (24) auf das Filterelement (10) aufgebracht und mittels eines Formwerkzeugs mit einem Formband (16) geformt wird.

9. Filterelement nach einem der Ansprüche 1 bis 8, **dadurch gekennzeichnet, dass** das Filterelement (10) ein Geruchs- und/oder Partikelfilter oder Flüssigkeitsfilter ist.

10. Verfahren zum Herstellen eines Filterelements (10) mit einer Dichtung (12) gemäß einem der Ansprüche 1 bis 9, mit den Schritten:
- Eindosieren eines thixotropen Dichtungsmaterials (24) in ein Formband (16) eines Formwerkzeugs,
- Andrücken des Formbands (16) mit dem thixotropen Dichtungsmaterial (24) an wenigstens einen Abschnitt des Umfangs des Filterelements (10), und
- Entfernen des Formwerkzeugs mit dem Formband (16), nachdem aus dem Dichtungsmaterial (24) eine Dichtung (12) mit der gewünschten Form an dem Filterelement (10) ausgebildet wurde.

11. Verfahren zum Herstellen eines Filterelements (10) mit einer Dichtung (12) gemäß einem der Ansprüche 1 bis 9, mit den Schritten:
- Aufbringen eines thixotropen Dichtungsmaterials (24) an wenigstens einem Abschnitt des Umfangs des Filterelements (10),
- Aufbringen eines Formwerkzeugs mit einem Formband (16) auf dem thixotropen Dichtungsmaterial (24),
- Formen des Dichtungsmaterials (24) mittels des Formbands (16), so dass eine Dichtung (12) mit der gewünschten Form an dem Filterelement (10) ausgebildet wird, und
- Anschließendes Entfernen des Formwerkzeugs mit dem Formband (16).

12. Verfahren nach Anspruch 10 oder 11, **dadurch gekennzeichnet, dass** das thixotrope Dichtungsmaterial (24) beispielsweise thixotropes PUR und/oder thixotropes Silikon ist.
